# EUROPÄISCHE PATENTSCHRIFT

(11) **EP 1 528 269 B1**
(45) Veröffentlichungstag und Bekanntmachung des Hinweises auf die Patenterteilung: **21.02.2007**
(21) Anmeldenummer: 04025357.7
(22) Anmeldetag: 26.10.2004
(51) Int. Cl.: F16B 37/12, F16B 5/06

(54) **Vorrichtung zur Verbindung eines plattenförmigen Materials mit einem Profilstab**
Device for the connection of a plate with a sectional bar
Dispositif pour le raccordement d'un plat avec une barre sectionnelle

(30) Priorität: 27.10.2003 DE 20316537 U
(43) Veröffentlichungstag der Anmeldung: 04.05.2005
(73) Patentinhaber: Jussel, Franz, 6923 Lauterach (AT)
(72) Erfinder: Jussel, Franz, 6923 Lauterach (AT)
(74) Vertreter: Riebling, Peter

(56) Entgegenhaltungen:
- DE-A- 2 217 835
- DE-A- 2 811 747
- DE-A- 19 838 898
- US-A- 5 192 145

## Beschreibung

Die Erfindung betrifft eine Vorrichtung zur Verbindung eines plattenförmigen Materials mit einem Profilstab nach dem Oberbegriff des Patentanspruchs 1.

Mit dem Gegenstand der DE 40 16 320 C1 ist eine Querverbindungsvorrichtung von zwei rechtwinklig aufeinander stehenden, mit hinterschnittenen Längsnuten versehenen Profilstäben offenbart. Bei dieser Querverbindungsvorrichtung werden zwei mit Längsnuten hinterschnittene Profilstäbe mit einer an ihrem einen Ende einen Kopf aufweisenden Verbindungsschraube, die in einer hinterschnittenen Längsnut des Profilstabes angeordnet ist und an ihrem anderen Ende ein Gewinde aufweist, dass in eine Schraubenmutter eingreift, die in der hinterschnittenen Längsnut des querverlaufenden Profilstabs angeordnete ist und mit Ihrem Kopf ein zylindrisches Wiederlagerstück hintergreift, das in die hinterschnittene Längsnut des Profilstabs axial unverschieblich eingebaut ist, welches eine Durchtrittsbohrung für die Verbindungsschraube hat, miteinander verbunden.

Eine derartige Verbindungsvorrichtung hat das Ziel, zwei senkrecht aufeinander stehende Profilstäbe miteinander zu verbinden.

Eine derartige Verbindungsvorrichtung ist jedoch nur eingeschränkt einsetzbar. Das zur Befestigung der Verbindungsschraube notwendige Werkzeug wird über die Längsnut des Profilstabes zum Kopf der Verbindungsschraube geführt, um diese in dem Gegenlagerstück zu befestigen. Hieraus wird ersichtlich, dass der zu befestigende Profilstab in seinen Längsabmessungen nur begrenzt variabel ist, da das entsprechende Werkzeug, zur Befestigung der Verbindungsschraube (hier Innensechskantschlüssel) ebenfalls in einer nur begrenzten Längenabmessung verfügbar ist. Ein zu langes Werkzeug wirkt sich negativ auf das Anzugsmoment des Befestigungsmittels aus. Die Festigkeit der Verbindung ist somit nicht gewährleistet.

Es hat sich als wichtig herausgestellt, dass eine derartige Verbindungsvorrichtung mit einer größtmöglichen Flexibilität in Ihrer Verwendung bevorzugt eingesetzt wird. Hierzu ist es notwendig, neben der Verbindungstechnik von zwei Profilstäben auch die Verbindung eines Profilstabes mit anderen Materialien, wie z. B. plattenförmiges Material vorzusehen.

Eine derartige Verbindungsvorrichtung soll die herkömmlich bekannte Verbindungsvorrichtung ersetzen, die lediglich zur Verbindung von zwei senkrecht aufeinander stehenden Profilstäben verwendbar ist.

Mit der DE 2 217 835 A wird eine Schraubverbindung für Strangpressprofilteile mit einem in eine Bohrung des Profilteils einschraubbaren Schraubteil offenbart, wobei das Außengewinde härter als die Innenwand der Bohrung ist, welche rückspringende, in Nutenlängsrichtung verlaufende Wandbereiche aufweist, wobei die Bohrungsinnenwand unter Bildung eines sternförmigen lichten Querschnitts mit mindestens zwei im Querschnitt dreieckförmigen oder dergleichen Tragrippen und unter sich gleichen, angrenzenden Längsnuten zwischen diesen Rippen je vollen Querschnittquadranten versehen ist.
Diese Erfindung weist den Nachteil auf, dass das Schraubteil direkt in die Stirnseite der Längsnut eines Profilstabes eingeschraubt wird, wobei die Schneidschraube in der vorliegenden Erfindung in ein zu befestigendes Plattenmaterial eingeschraubt wird und gleichzeitig als Gegenlager für den Kopf der Befestigungsschraube dient, was der vorbenannten Erfindung nicht zu entnehmen ist.

Mit der DE 28 1 747 A wird eine Gewindebuchse mit Außengewinde und Innenbohrung und mit Verdrehsicherung offenbart, wobei diese einen Kragen und einen sich anschließenden Bereich mit geringer Wandstärke und tragendem Gewindebereich aufweist, so dass nach Einschrauben der Gewindebuchse in eine Bohrung eines Werkstücks der Kragen an der Werkstückoberfläche durch Stauchen in die Oberfläche durch axiale Belastung des Kragens einpressbar ist.

Diese Druckschrift weist den Nachteil auf, dass diese lediglich eine in eine Bohrung einschraubbare Schneidschraube mit einem als Ring ausgebildeten Anschlag offenbart, welcher klemmend auf der Oberfläche eines Werkstückes gehalten wird.
Weitere Merkmale mit der vorliegenden Erfindung bestehen nicht.

Mit der US 5,192,145 A wird eine Querverbindung von zwei rechtwinklig aufeinander stehenden Profilstäben mit Längsnuten offenbart, wobei ein Profilstab zu einer vorderen Stirnseite senkrecht auf die axiale Längserstreckung eines weiteren Profilstabes aufgeschraubt wird. Diese Befestigungsart erlaubt nur die Verbindung von zwei senkrecht aufeinander stehenden Profilstäben, wobei die Befestigungsteile in halboffenen Profilkanälen der Profilstäbe angeordnet sind. Dieser Druckschrift ist jedoch nicht die Aufgabe einer Befestigung von Plattenmaterial mit Durchgangsbohrungen, in welche eine Schneidschraube eingeschraubt ist, zu entnehmen.

Mit der DE 198 38 898 A1 wird eine Clipverbindung zwischen zwei Bauteilen offenbart, wobei der Kunststoff-Clip mit einer Befestigungsschraube aufgeschraubt wird und mit seinen an der Oberfläche aufweisenden Einschnitten in eine Sacklochbohrung eingepresst wird.
Diese Erfindung weist den Nachteil auf, dass hier die Befestigung als Klemmbeziehungsweise als Pressverbindung offenbart ist und nicht als Schneidverbindung, wie in der vorliegenden Erfindung.

Die Aufgabe der Erfindung ist es deshalb, eine flexible Verbindungsvorrichtung vorzuschlagen, mit der es möglich ist, nahezu jedes beliebige Material an Profilstäben einfach und kostengünstig zu befestigen.

Zur Lösung der gestellten Aufgabe ist die Erfindung durch die technische Lehre des Anspruchs 1 gekennzeichnet.

Wesentliches Merkmal der Erfindung ist, dass verschiedenartige Materialien, wie. z. B. plattenförmiges Material oder Ähnliches, an einem Profilstab befestigt wird.

Mit der gegebenen technischen Lehre ergibt sich nun der Vorteil, dass sowohl senkrecht zueinander stehende Profilstäbe, als auch Verbindungen zwischen einem Profilstab und anderen Materialien, wie z. B. plattenförmiges Material, möglich sind.

Vorteil der Erfindung ist, dass es nun erstmals möglich ist, eine unvorbereitete Platte parallel zur Längserstreckung eines Profilstabes mit einem solchen Profilstab zu verbinden. Dies lehrt die US 5,192,145 A1 nicht. Dort wird lediglich die Stirnseite eines ersten Profilstabes mit der Längsseite eines zweiten Profilstabes verbunden, wobei die Befestigungsmittel in halboffenen Profilkanälen angeordnet sind. Daher kann die Befestigung nur in einer bestimmten Orientierung der miteinander zu verbindenden Profilstäbe erfolgen. Es ist nicht möglich, beliebige Bohrungen in den zu verbindenden Profilstäben zur gegenseitigen Befestigung vorzusehen.

Zwar offenbart die DE 40 16 320 C1 auch eine Verbindung von mindestens einem Profilstabes und einem zweiten Material, jedoch beschränkt sich die vorgenannte Erfindung auf die Verbindungsausführung eines senkrecht zum ersten Profilstab stehenden zweiten Profilstabes. Dies ist jedoch nicht vergleichbar mit der Flexibilität der vorliegenden Erfindung, da hier erstmals eine Vorrichtung zur Verbindung eines Profilstabs mit einem plattenförmigen Material verwendet wird.

Zu diesem Zweck sieht die Erfindung vor, dass in einer ersten Ausführungsform das zu befestigende plattenförmige Material mit mindestens einer Bohrung durchsetzt ist, in welcher eine mit einem linksgerichteten Außengewinde als Schneidgewinde ausgeführte Schneidschraube eingesetzt ist. Diese Schneidschraube dient als Auflage des Befestigungsmittels im plattenförmigen Material. Das Befestigungsmittel erstreckt sich durch eine Durchgangsbohrung in der Schneidschraube, wobei der Durchmesser der Durchgangsbohrung größer ist, als der Außendurchmesser des Befestigungsmittels.

Zur Befestigung des plattenförmigen Materials wird mindestens ein Lagerstück in die hinterschnittene Längsnut des Profilstabes eingebracht und dient zu Aufnahme des Befestigungsmittels. Dieses Lagerstück ist geometrisch so ausgebildet, dass ein Einschwenken des Lagerstücks an jeder beliebigen Stelle der Längsnut des Profilstabes möglich ist. Zusätzlich ist das Lagerstück mit einer selbstfixierenden, federnden Kugel ausgestattet, die das Lagerstück nach Einschwenken und Einbringen in die Längsnut des Profilstabes positioniert. Des Weiteren ist das Lagerstück nach Lösen des Befestigungsmittels axial innerhalb der Längsnut des Profilstabes variabel verschiebbar.

Durch eine derartige Verbindungsvorrichtung ist ein Verbinden eines Profilstabes mit verschiedenartigen Materialien gewährleistet, wie z.B. plattenförmiges Material.

Durch den Einsatz einer Verbindungsvorrichtung gemäß der Erfindung ist eine kostengünstige und flexible Verbindungsart durchführbar, da unabhängig der Ausführung der zu verbindenden Materialien lediglich eine Verbindungsvorrichtung eingesetzt wird.

Diese Erfindung beschränkt sich nicht ausschließlich aus der hier vorgenannten Ausführungsform, sondern ist in weiteren Ausführungsformen durchführbar und untereinander kombinierbar. Der Gegenstand der Erfindung zur vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einer der Ausführungsform darstellenden Zeichnung näher erläutert. Hierbei gehen aus den Zeichnungen und ihrer Beschreibungen weitere wesentliche Merkmale und Vorteile der Erfindung hervor.

Es zeigen:
- Figur 1:: Eine perspektivische Ansicht einer Schneidschraube in einer Ausführungsform;
- Figur 2:: Eine perspektivische Ansicht eines selbstfixierenden Lagerstücks;
- Figur 3:: Eine perspektivische Ansicht einer Schneidschraube und eines Befestigungsmittels im Eingriff;

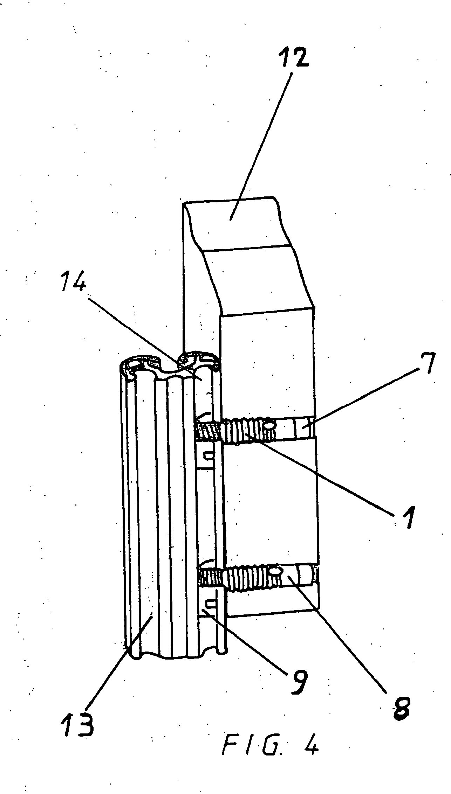

- Figur 4:: Zeigt eine perspektivische Ansicht eines Profilstabes mit einem plattenförmigen Material im befestigten Zustand.

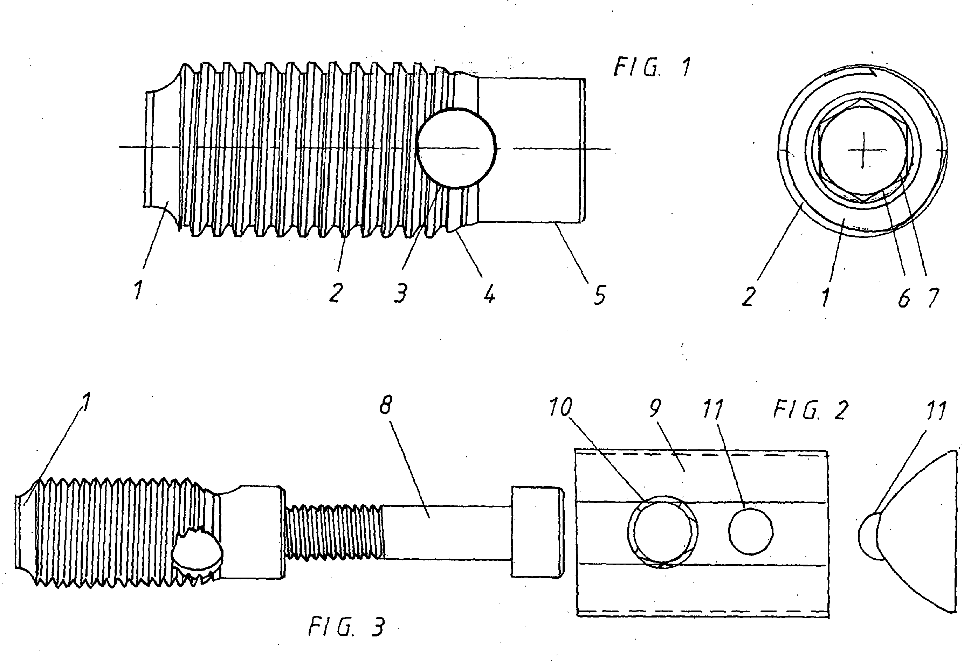

Die Verbindungsvorrichtung nach der Erfindung besteht gemäß Figur 1 im Wesentlichen aus einem Linksgewindeteil 2 mit einem konischen Anschnitt 4, einem gewindefreien, zylindrischen Teil 5 und ein um 90° zur Zylinderachse versetzte Durchgangsbohrung 3.

Des Weiteren ist die Schneidschraube 1 mit einer Durchgangsbohrung 7 versehen. Die querverlaufende Durchgangsbohrung 3 dient zur Bildung von Schnittkanten in dem konischen Gewindeteil 4.

Zum Einsetzen der Schneidschraube 1 in das plattenförmige Material oder Ähnlichem ist diese im Innenbereich der zylindrischen Durchgangsbohrung 7 mit einem Innensechskant 6 versehen.

Zur Befestigung eines plattenförmigen Materials oder Ähnlichem an einem Profilstab 13 ist des Weiteren ein Lagerstück 9 zur Aufnahme eines Befestigungsmittels 8 vorgesehen. Vorgenanntes Lagerstück ist entsprechend der Gewindegröße des Befestigungsmittels 8 mit einem Innengewinde 10 ausgestattet. Zusätzlich ist das Lagerstück im Scheitelpunkt seiner zylindrischen Form mit einer federgelagerten Kugel ausgestattet. Diese hat zur Aufgabe, das Lagerstück in der Längsnut 14 des Profilstabes 13 in der eingebrachten Position zu fixieren, um somit das Befestigen von z. B. plattenförmigem Material zu erleichtern. Die zylindrische Form des Lagerstücks 9 ist so ausgebildet, dass das Einbringen des Lagerstücks 9 an jeder beliebigen Position de r Längsnut 14 des Profilstabes 13 möglich ist.

Die Eingriffsposition des Befestigungsmittels 8 mit der Schneidschraube 1 ist gemäß Figur 3 dargestellt. Hier wird deutlich, dass die Schneidschraube mit der gewindefreien, zylindrischen Seite zur Auflage des Kopfes des Befestigungsmittels 8 dient. Nach dem Einbringen des Befestigungsmittels 8 in die Durchgangsbohrung 7 der Schneidschraube 1 wird nunmehr das Befestigungsmittel 8 in das Innengewinde 10 des Lagerstücks 9 eingedreht. Hierdurch wird das zu befestigende Material an den Profilstab 13 herangezogen und befestigt.

### Zeichnungslegende

- 1: Schneidschraube
- 2: Außengewinde, links
- 3: Bohrung, 90° zur Durchgangsbohrung
- 4: Gewindeanschnitt, konisch
- 5: Zylinderschaft
- 6: Innensechskant
- 7: Durchgangsbohrung
- 8: Befestigungsmittel
- 9: Lagerstück, selbstfixierend
- 10: Befestigungsgewinde für Befestigungsmittel
- 11: Kugel, federnd gelagert
- 12: Plattenförmiges Material
- 13: Profilstab
- 14: Längsnut

## Patentansprüche

1. Vorrichtung bestehend aus einem an einem Profilstab (13) zu befestigenden Material (12), das mindestens eine Öffnung aufweist, in die eine Schneidschraube (1) eingeschraubt ist, durch welche eine Schraube (8) mit ihrem bolzenseitigen Gewinde hindurch greift und in einen Nutenstein eingeschraubt ist, der in einem Profilkanal des Profilstabes angeordnet ist, **dadurch gekennzeichnet, dass** das zu befestigende Material als Platte (12) ausgebildet ist, und dass die Öffnung als Bohrung (7) ausgebildet ist, in welcher die mit einem linksgerichteten Außengewinde als Schneidgewinde ausgeführte Schneidschraube (1) eingesetzt ist, die als Auflage des Befestigungsmittels (7) im plattenförmigen Material (12) dient.

2. Vorrichtung nach Anspruch 1, **dadurch gekennzeichnet, dass** das plattenförmige Material (12) mit mindestens einer Verbindungsvorrichtung an einem Profilstab (13) befestigt ist.

3. Vorrichtung nach einem der vorhergehenden Ansprüche 1 oder 2, **dadurch gekennzeichnet, dass** das plattenförmige Material (12) mindestens eine Materialdicke entsprechend der Länge der Schneidschraube (1) aufweist.

4. Vorrichtung nach einem der vorhergehenden Ansprüche 1 bis 3, **dadurch gekennzeichnet, dass** das Befestigungsmittel (8) zur Befestigung des plattenförmigen Materials (12) an einem Profilstab (13) mittels einem handelsüblichen Werkzeuges befestigt ist.

5. Vorrichtung nach einem der vorhergehenden Ansprüche 1 bis 4, **dadurch gekennzeichnet, dass** das Werkzeug ein Innensechskantschlüssel ist.

6. Vorrichtung nach einem der vorhergehenden Ansprüche 1 bis 5, **dadurch gekennzeichnet, dass** das zu befestigende Material eine andere geometrischen Form, wie zum Beispiel rund, konvex, konkav oder dergleichen aufweist und an einem Profilstab (13) befestigt ist.

7. Vorrichtung nach einem der vorhergehenden Ansprüche 1 bis 6, **dadurch gekennzeichnet, dass** zur Befestigung des plattenförmigen Materials (12) mindestens ein Lagerstück (9) in die hinterschnittene Längsnut (14) des Profilstabes (13) eingebracht ist und dass das Lagerstück (9) mit einer selbstfixierenden, federnden Kugel (11) ausgestattet ist, die das Lagerstück (9) nach Einschwenken und Einbringen in die Längsnut (14) des Profilstabes (13) positioniert.

## Claims

1. Device consisting of a material (12) which is to be fastened to a profiled bar (13) and has at least one opening, into which a tapping screw (1) is screwed, through which a screw (8) engages with its shaft-side thread and is screwed into a slot nut, which is arranged in a profiled channel of the profiled bar, **characterised in that** the material to be fastened is configured as a plate (12), and **in that** the opening is configured as a bore (7), in which the tapping screw (1) designed with a left-handed external thread as a tapping thread is inserted, which is used as a support for the fastening means (7) in the plate-like material (12).

2. Device according to claim 1, **characterised in that** the plate-like material (12) is fastened to a profiled bar (13) with at least one connecting device.

3. Device according to either of claims 1 or 2, **characterised in that** the plate-like material (12) has at least a material thickness corresponding to the length of **the tapping screw (1).**

4. Device according to any one of the preceding claims 1 to 3, **characterised in that** the fastening means (8) for fastening the plate-like material (12) to a profiled bar (13) is fastened by means of a conventional commercial tool.

5. Device according to any one of the preceding claims 1 to 4, **characterised in that** the tool is a hexagon socket screw key.

6. Device according to any one of the preceding claims 1 to 5, **characterised in that** the material to be fastened has another geometric shape, such as, for example round, convex, concave or the like and is fastened to a profiled bar (13).

7. Device according to any one of the preceding claims 1 to 6, **characterised in that** at least one bearing piece (9) is introduced into the undercut longitudinal groove (14) of the profiled bar (13) to fasten the plate-like material (12) and **in that** the bearing piece (9) is equipped with a self-fixing, resilient ball (11), which positions the bearing piece (9) after pivoting and introduction into the longitudinal groove (14) of the profiled bar (13).

## Revendications

1. Dispositif composé d'un matériau (12) qui doit être fixé à une barre profilée (13) et qui présente au moins une ouverture dans laquelle est vissée une vis autotaraudeuse (1) à travers laquelle une vis (8) passe avec son filetage prévu côté tige et est vissée dans un coulisseau disposé dans un conduit profilé de la barre profilée, **caractérisé en ce que** le matériau à fixer est conçu comme une plaque (12) et **en ce que** l'ouverture est conçue comme un perçage dans lequel est placée la vis autotaraudeuse (1) qui présente comme filetage autotaraudeur un filetage extérieur à gauche et qui sert de support pour le moyen de fixation (8) dans le matériau en forme de plaque (12).

2. Dispositif selon la revendication 1, **caractérisé en ce que** le matériau en forme de plaque (12) est fixé à une barre profilée (13) à l'aide d'au moins un dispositif de liaison.

3. Dispositif selon l'une des revendications 1 ou 2 précédentes, **caractérisé en ce que** le matériau en forme de plaque (12) présente au moins une épaisseur de matériau correspondant à la longueur de la vis autotaraudeuse (1).

4. Dispositif selon l'une des revendications 1 à 3 précédentes, **caractérisé en ce que** le moyen de fixation (8) pour la fixation du matériau en forme de plaque (12) à une barre profilée (13) est fixé à l'aide d'un outil du commerce.

5. Dispositif selon l'une des revendications 1 à 4 précédentes, **caractérisé en ce que** l'outil est une clé à six pans.

6. Dispositif selon l'une des revendications 1 à 5 précédentes, **caractérisé en ce que** le matériau à fixer présente une autre forme géométrique, par exemple ronde, convexe, concave, etc. et est fixé à une barre profilée (13).

7. Dispositif selon l'une des revendications 1 à 6 précédentes, **caractérisé en ce que** pour la fixation du matériau en forme de plaque (12), au moins un élément de montage (9) est introduit dans la rainure longitudinale contre-dépouillée (14) de la barre profilée (13), et **en ce que** l'élément de montage (9) est équipé d'une boule élastique à autofixation (11) qui le positionne une fois qu'il a pivoté et qu'il a été introduit dans la rainure longitudinale (14) de la barre profilée (13).
